# EUROPEAN PATENT APPLICATION

(11) **EP 4 807 421 A1**
(43) Date of publication of application: **16.09.2026**
(21) Application number: 26164615.2
(22) Date of filing: 13.03.2026
(51) Int. Cl.: G02B 6/44

(54) **OPTICAL PATCH PANEL**

(30) Priority: 14.03.2025 US 202519079606
(71) Applicant: Nvidia Corporation, Santa Clara, CA 95051 (US)
(72) Inventor: MENTOVICH, Elad, Santa Clara, 95051 (US); ALBRIGHT, Ryan, Santa Clara, 95051 (US); NORTON, John, Santa Clara, 95051 (US); HERRING, David, Santa Clara, 95051 (US); HAND, Sam, Santa Clara, 95051 (US); LANING, Ray, Santa Clara, 95051 (US)
(74) Representative: Mathys & Squire

(57) **Abstract**

A server rack includes an optical patch panel and a plurality of processing units. The optical patch panel includes a plurality of L1 connections, a plurality of L2 connections, and a removable connectivity cartridge optically connecting the plurality of L1 connections and the plurality of L2 connections. The plurality of processing units is connected to an L2 domain of a datacenter through the removable connectivity cartridge of the optical patch panel.

## Description

### BACKGROUND

As artificial intelligence and/or machine learning use increases, the use of large clusters of computing resources (e.g., graphical processing units (GPUs), central processing units (CPUs), data processing units (DPUs), and/or the like) is also increasing. Datacenters include such large clusters of computing resources. In datacenters, various connections are formed between computing resources in servers within racks to distribute power and/or data. Cables and connectors may extend from a variety of locations for routing to various systems. The cables and connectors may be routed between servers within the racks for connections to various systems within the racks. Links between computing resources and/or chips thereof are based on copper cables (short reach) or optical cables. In the optical cables, the data to be transferred between chips (or switches) is encoded/decoded from electrical to optical signal (and vice versa) and conveyed via an optical fiber. For optical connections, optical switches encompass computing resources to distribute data packets among a plurality of optical channels to multiple receivers. Those optical switches may be configured to provide optical signals from a single output channel of the optical switch to multiple channels that can connect to separate external devices. Routing the cables and connectors and forming connections may lead to tangled, difficult to access systems that make modifications difficult due to the overlapping cables and difficulty of tracing cables and connectors to their respective sources. This may impede air flow and cause problems with maintenance or changes to server rack configurations. Moreover , multiple cables and connectors (e.g., large quantities of cables and connectors) coupled to a single component of a server rack limits serviceability of large clusters of computing resources. Therefore, there is a need in the art for optical cable designs, connections, and/or organization schemes that allow for ease in use, servicing, and reconfiguration of large clusters of computing resources.

### GENERAL DESCRIPTION

The invention is defined by the claims. In order to illustrate the invention, aspects and embodiments which may or may not fall within the scope of the claims are described herein.

The number of connections between servers in datacenters is increasing, as the amount of information being processed by datacenters and communicated between the included servers increases. Due to the number of connections between servers in a datacenter, and the corresponding number of cables routed among the various servers in the datacenter, routine maintenance and re-optimization of server connections within a datacenter is difficult and time consuming, as a technician is required to disconnect and reconnect many cables during such maintenance operations. Misconnecting a single cable can create operational performance problems for the datacenter, which can require substantial follow-up maintenance to identify and reconnect the misplaced cables.

In at least one example embodiment, a datacenter corresponds to a collection of network devices, such as network switches (e.g., Ethernet switches, IP routers, multiservice platforms, various transmission network elements, legacy communication equipment, or in any other suitable communication system) connected with a collection of L1 domains such as servers or compute nodes. A switch fabric serves to transfer the data between the switch ports. A switch fabric comprises one or more interconnect circuits, which may be arranged in various switch fabric architectures, e.g., m*m crossbar, Banyan, Benes, Omega, Clos, multi-plane, STS, TST, shared memory, buffered crossbar, any other suitable blocking or non-blocking architecture, or any applicable mixed architecture thereof. A switch fabric is realized in typical embodiments by hardware, which may comprise Field-Programmable Gate Arrays (FPGAs) and/or Application-Specific Integrated Circuits (ASICs), and in some implementations also bus interconnects. The datacenter may adhere to a networking topology (e.g., a hierarchal networking topology), such as a fat tree topology, a Slim Fly topology, a Dragonfly topology, and/or the like. The datacenter routes traffic amongst the network switches and L1 domains (e.g., servers, compute nodes, and/or the like) therein, and at least one layer of the topology in the datacenter is coupled to the communication network to allow networking traffic to flow between the datacenter and the network device(s). Various embodiments of the present disclosure enable to provide front serviceability for optics at multiple L1 domains, making it easier to replace faulty components without extensive re-cabling.

In some embodiments, optical interconnects include transceivers used to connect network-connected devices (e.g., remote client switches, network adapters such as Network Interface controllers (NICs) and Host Channel Adapters (HCAs), Smart-NICs (NICs having embedded CPUs), network-enabled Graphics Processing Units (GPUs), and the like). The terms "network-connected device" and "network device" are used interchangeably herein. In certain embodiments, an optical interconnect includes a substrate, one or more optical waveguides, one or more first micro-lenses, one or more second micro-lenses, and first and second mechanical fixtures.

A "node" as described herein may refer to a network switch to which a plurality of computer processing units (CPUs), graphical processing units (GPUs), data processing units (DPUs), parallel processing units (PPUs), quantum processing units (QPUs), and/or memory media are connected in an arbitrary number. The network switch may communicate with other network switches of the same kind to which the same processing and memory units may be connected. However, in other implementations, "node" may also refer to a processor which may be responsible for communication with all other nodes in the network or subnetwork.

QPUs are configured to perform one or more operations associated with a quantum algorithm. In some embodiments, each of the one or more QPUs may include a plurality of qubits and the one or more QPUs may be in communication with each other via a quantum channel. In some embodiments, each of the plurality of qubits may include local qubits, global qubits, and/or synchronization qubits. In some embodiments, the local qubits of each QPU may be configured to perform the one or more operations associated with the quantum algorithm on the QPU that the local qubits are associated with.

An "optical fiber" as described herein can refer to a single optical fiber (e.g., including a core and a cladding) to provide unidirectional optical communication, can refer to a bidirectional pair of optical fibers (e.g., each including a core and a cladding) to provide both transmit and receive communications in an optical network, or can refer to a multicore fiber, such that a single cladding could encapsulate a plurality of single-mode cores. Optical fibers can extend contiguously and uninterrupted between node or send/receive pairs (e.g., via pass-through connections) or include two or more fibers connected via fiber-to-fiber connections such that the fibers function or perform as a single fiber.

Silicon Photonics (SiP) is a technology that enables optical systems to be manufactured using silicon processes with silicon as the optical medium. Various optical components, such as interconnects and signal processing components, may be fabricated and integrated in a single SiP device. Some SiP devices are fabricated on a silica substrate or over a silica layer on a silicon substrate, a technology that is often referred to as Silicon on Insulator (SOI). In certain optical systems, a SiP device is attached to an external device to facilitate optical communications. However, it is generally difficult to accurately align light signals on the SiP with an external device that receives the light.

In order to address technical challenges associated with maintenance of servers within a datacenter, optical patch panels interface between L1 optical fiber groupings connecting processing systems within a rack and L2 optical fiber groupings that connect the rack to other racks in a datacenter. Rather than including a large number of cables and connectors positioned within the housing of the optical patch panel various embodiments address these difficulties by providing an optical patch panel having interchangeable connection cartridges that define the connectivity between L1 and L2 interconnections. Each of the interchangeable cartridges may have different connectivity (e.g., shuffle connections, hierarchical connections, and/or the like) and these cartridges can be interchanged through the front of the rack. The optical fibers are installed in a pluggable format so that if an optical fiber is damaged, the single optical fiber can be replaced without replacing an entire transceiver. The optical patch panel enables a configurable backplane of the datacenter in which a modular interconnect system allows dynamic reconfiguration of the communication between the different components.

A datacenter often includes a plurality of L1 domains (e.g., individual servers) that are in communication with respective L2 domains or aggregation layers. For example, an L1 domain is a plurality of compute nodes, processing units, and/or compute elements that are either directly connected or via one layer of switches. An L2 domain is a domain where elements of the domain are connected through two layers of switches. For example, an L2 domain may aggregate traffic from a plurality of L1 domains to perform functions such as load balancing. Some datacenters may also include an L3 domain configured to route traffic between various L2 domains and communicate with networks external to the data center. An L1 domain may include one or more processing units, such as GPUs, CPUs, DPUs, PPUs, QPUs, and/or the like. These processing units are often housed on server trays that are mounted within server racks. Conventionally, a server rack may house a plurality of trays that each host a plurality of processing units (e.g., GPUs, CPUs, DPUs, PPUs, QPUs, and/or the like) and trays that host switches, such as a top-of-rack switch configured to communicate with the L2 domain (e.g., via switch fabric).

In accordance with at least one embodiment, an optical patch panel comprises: a plurality of L1 connections; a plurality of L2 connections; and a removable connectivity cartridge optically connecting the plurality of L1 connections and L2 connections. The removable connectivity cartridge defines a connectivity topology connecting the plurality of L1 connections and the plurality of L2 connections, for example, by defining a plurality of ports configured to enable various connection topologies (e.g., shuffling, hierarchical, and/or the like). In at least one embodiment, the removable connectivity cartridge defines a connectivity topology selected from: shuffling or hierarchical. In at least one embodiment, the optical patch panel further comprises a plurality of cartridges contained within a housing. In at least one embodiment, the plurality of cartridges are configured to be removable through a front panel of the housing. In at least one embodiment, the optical patch panel further comprises a plurality of L1 connectors configured for at least: top connections, back connections, or front connections. In at least one embodiment, the optical patch panel further comprises a plurality of L2 connectors configured for at least: top connections, back connections, or front connections. In at least one embodiment, the removable connectivity cartridge defines a port mapping scheme between the plurality of L1 connections and the plurality of L2 connections, and wherein the removable connectivity cartridge is interchangeable with a second removable connectivity cartridge defining a different port mapping scheme between the plurality of L1 connections and the plurality of L2 connections. The optical patch panel may define ports on various locations thereon. For example, a first surface of the optical patch panel (hereafter the "front" of the optical patch panel) and a second surface of the optical patch panel (hereafter the "back" of the optical patch panel) are located opposite one another. A third surface of the optical patch panel (hereafter the "top" of the optical patch panel) is located between the front and the back of the optical patch panel such that it connects the front and the back. The front of the optical patch panel is the surface facing out of the front of the server rack, and the back of the optical patch panel is the surface facing out of the back of the server rack. Since the optical patch panel is configured to enable the connectors to be located on the front, back, or top thereof, an exemplary optical patch panel may include ports for connectors on its front (front connection), back (back connections), and/or top (top connections) surfaces. Whether a particular optical patch panel (or a component thereof) includes ports on its front, back, and/or top may be determined as suitable for various applications.

In accordance with at least one embodiment, a server rack comprises: a plurality of processing units; and an optical patch panel comprising: a plurality of L1 connections; a plurality of L2 connections; and a removable connectivity cartridge optically connecting the plurality of L1 connections and L2 connections; wherein the plurality of processing units are connected to an L2 domain of a datacenter through the removable connectivity cartridge of the optical patch panel. In at least one embodiment, the removable connectivity cartridge defines a connectivity topology selected from: shuffling or hierarchical. In at least one embodiment, the server rack further comprises a plurality of cartridges contained within a housing of the server rack. In at least one embodiment, the plurality of cartridges are configured to be removable through a front panel of the housing. In at least one embodiment, the server rack further comprises a plurality of L1 connectors configured for at least: top connections, back connections, or front connections. In at least one embodiment, the server rack further comprises a plurality of L2 connectors configured for at least: top connections, back connections, or front connections. In at least one embodiment, the removable connectivity cartridge defines a port mapping scheme between the plurality of L1 connections and the plurality of L2 connections, and wherein the removable connectivity cartridge is interchangeable with a second removable connectivity cartridge defining a different port mapping scheme between the plurality of L1 connections and the plurality of L2 connections.

In accordance with at least one embodiment, a method comprises: providing a server rack defining a housing; providing an optical patch panel comprising: a plurality of L1 connections, a plurality of L2 connections, a removable connectivity cartridge; providing a plurality of processing units; disposing a plurality of cartridges within the housing; optically connecting, via the removable connectivity cartridge, the plurality of L1 connections and the plurality of L2 connections; and connecting, via the removable connectivity cartridge, the plurality of processing units to an L2 domain of a datacenter. In at least one embodiment, the removable connectivity cartridge defines a connectivity topology selected from: shuffling or hierarchical. In at least one embodiment, the plurality of cartridges are configured to be removable through a front panel of the housing. In at least one embodiment, the plurality of L1 connectors are configured for at least: top connections, back connections, or front connections. In at least one embodiment, the plurality of L2 connectors are configured for at least: top connections, back connections, or front connections. In at least one embodiment, the removable connectivity cartridge defines a port mapping scheme between the plurality of L1 connections and the plurality of L2 connections, and wherein the removable connectivity cartridge is interchangeable with a second removable connectivity cartridge defining a different port mapping scheme between the plurality of L1 connections and the plurality of L2 connections.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF THE SEVERAL VIEWS OF THE DRAWINGS

For a better understanding of embodiments of the disclosure and to show how the same may be carried into effect, reference will now be made, purely by way of example, to the accompanying drawings in which like numerals designate corresponding elements or sections throughout. In the accompanying drawings:
FIG. 1 illustrates an example datacenter according to at least one embodiment;
FIG. 2 illustrates an example server rack, in accordance with at least one embodiment;
FIG. 3 illustrates an optical patch panel of the server rack of FIG. 1, in accordance with at least one embodiment;
FIG. 4 illustrates a plurality of server racks, in accordance with at least one embodiment;
FIGS. 5A-5B illustrate a shuffling connectivity topology and a hierarchical connectivity topology, respectively, in accordance with at least one embodiment;
FIG. 6 provides an example method, in accordance with at least one embodiment;
FIG. 7 illustrates an example computer system that may include electrical components, in accordance with at least one embodiment;
FIG. 8 provides a block diagram that schematically illustrates a computing system that may include one or more electrical components of various embodiments;
FIG. 9 illustrates an example computing environment that may include electrical components, in accordance with at least one embodiment; and
FIG. 10 illustrates an example network device in accordance with at least one embodiment.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION

The present disclosure more fully describes various embodiments with reference to the accompanying drawings. It should be understood that some, but not all embodiments are shown and described herein. Indeed, the embodiments may take many different forms, and accordingly this disclosure should not be construed as limited to the embodiments set forth herein. Rather, these embodiments are provided so that this disclosure will satisfy applicable legal requirements. Like numbers refer to like elements throughout.

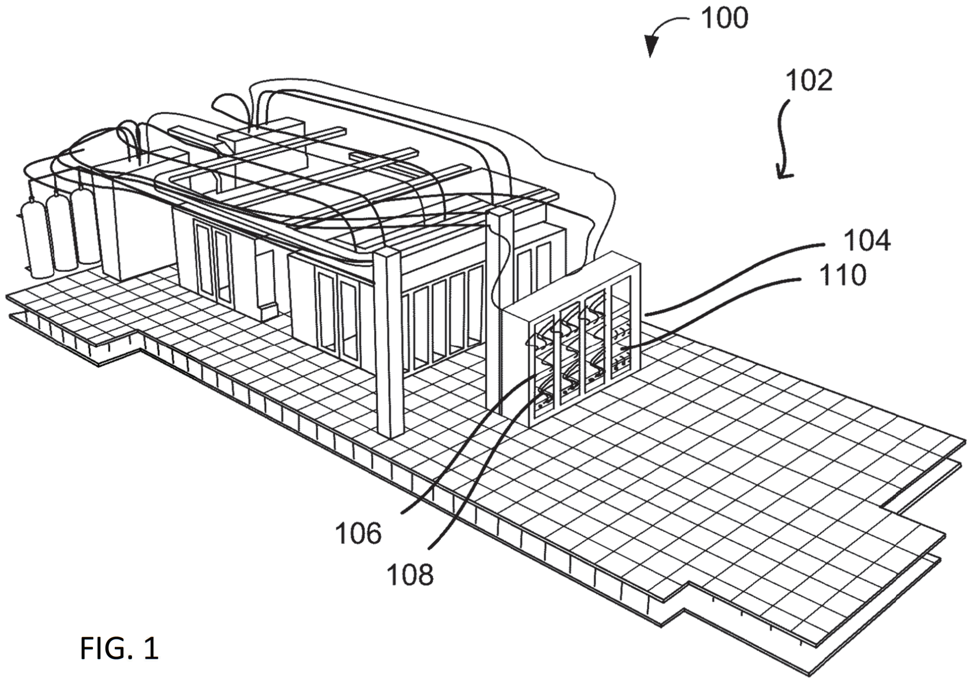

In at least one embodiment, a computing environment may include a variety of computing devices and control systems, as illustrated in data center 100 in FIG. 1. In at least one embodiment, data center 100 may include one or more rooms 102 having racks 104 and auxiliary equipment used to house one or more servers on one or more server trays. In at least one embodiment, data center 100 is supported by various cooling systems, such as cooling towers, cooling loops, pumps, and other support systems. In at least one embodiment, servers 106 are positioned within racks 104. In at least one embodiment, servers 106 within racks 104 receive operational power from a source and may also be coupled to various communication sources, such as a connection to a network line. In at least one embodiment, electrical cables 108 are extended to racks 104 to couple to individual servers 106. In at least one embodiment, electrical cables 108 are routed through compartments built into racks 104 to a backside 110 where various connections are made. In at least one embodiment, connections may extend between components within racks 104, such as from power distribution units to servers 106, as well as between different servers 106. In at least one embodiment, identifying starting and ending locations for electrical cables 108 may be challenging due to a large number of cables associated with each server 106 within racks 104.

In at least one embodiment, servers 106 are swapped out of racks 104 for maintenance, updates, and other operations. In at least one embodiment, servers 106 may be frequently replaced for validation and manufacturing test flow situations, among other operations. The optical patch panel enables factory installation and testing of cables, significantly reducing deployment time in data centers. In at least one embodiment, operations personnel remove connections to servers 106 prior to removal and either reroute electrical cables 108 or identify a storage location for electrical cables 108. In at least one embodiment, newly added servers 106 use different connections than previously used servers 106, leading to additional electrical cable routing. In at least one embodiment, electrical cables connected to each server 106 are numerous, which may restrict air flow and provide an unorganized appearance.

In at least one embodiment, electrical cables 108 are routed from various locations and may cover long distances across data centers prior to reaching a specified rack 104. In at least one embodiment, it is desirable to reduce rerouting and of cables during maintenance or server change out operations to reduce overall time and complexity with operations. In at least one embodiment, an interface panel 110 may be provided to reduce rerouting of cables and other connections during operations. In at least one embodiment, interface panels 110 are positioned within racks 104 near associated servers 106. In at least one embodiment, interface panels 110 include receptacles and other connection ports that correspond, or substantially correspond, to associated receptacles and connection ports for one or more servers 106. In at least one embodiment, interface panels 110 receive an initial input connection that is routed to servers 106 via internal writing of interface panels 110. In at least one embodiment, interface panels 110 may be arranged within racks 104, for example between racks 104 including servers 106, or within racks 104 that also house servers 106. In at least one embodiment, interface panels 110 include receptacles that receive connections from servers 106 and various other components to provide operational power or form data connections.

In at least one embodiment, interface panels 110 occupy rack space corresponding to a height of interface panels 110. In at least one embodiment, interface panels 110 are arranged next to racks 104 including servers 106 to supply power or form data connections to a particular number of servers 106 within racks 104. In at least one embodiment, interface panels 110 with greater numbers of receptacles or data interfaces may provide power or data communication to more servers 106 or various other components. In at least one embodiment, associated computing or data center devices include graphics processing units (GPUs), in switches, in dual inline memory module (DIMMs), or central processing units (CPUs). In at least one embodiment, an associated computing or data center device may include a processing card having one or more GPUs, switches, or CPUs thereon. In at least one embodiment, each of these GPUs, switches, and CPUs may be a heat generating or power consuming feature of this computing device. In at least one embodiment, this GPU, CPU, or switch may have one or more cores.

Datacenters often include a plurality of L1 domains (e.g., individual servers) that are in communication with respective L2 domains or aggregation layers. For example, an L1 domain is a plurality of compute nodes, processing units, and/or compute elements that are either directly connected (e.g., via NVlink infrastructure, for example) or via one layer of switches. An L2 domain is a domain where elements of the domain are connected through two layers of switches. For example, an L2 domain may aggregate traffic from a plurality of L1 domains to perform functions such as load balancing. Some datacenters may also include an L3 domain configured to route traffic between various L2 domains and communicate with networks external to the data center.

An L1 domain may include a one or more processing units, such as graphical processing units (GPUs), central processing units (CPUs), data processing units (DPUs), parallel processing units (PPUs), quantum processing units (QPUs), and/or the like. These processing units are often housed on trays that are mounted within server racks. Conventionally, a server rack may house a plurality of trays that each host a plurality of processing units (e.g., GPUs, CPUs, DPUs, PPUs, QPUs, and/or the like) and trays that host switches, such as a top-of-rack switch configured to communicate with the L2 domain (e.g., via switch fabric).

### Example Optical Patch Panel

Optical patch panels interface between L1 optical fiber groupings and L2 optical fiber groupings of server racks. In some embodiments, an optical patch panel may be used to provide power and/or form data connections for one or more servers or associated components within a rack. In at least one embodiment, an optical patch panel is an enclosed unit that may be coupled to a server rack, such as with connectors. In at least one embodiment, an optical patch panel is secured within a server rack proximate one or more servers (compute resources) to be supported by optical patch panel. As an example, the optical patch panel is secured in a top portion of a server rack to service servers connected within that server rack. In various embodiments, optical patch panels may be configured to enable various connectivity topologies, such as shuffling connectivity topologies, hierarchical connectivity topologies, and/or the like. Various embodiments of the present disclosure enable various port mapping schemes using serviceable cartridges between L1 optical fiber groupings and L2 optical fiber groupings. The use of serviceable cartridges determines the network topology. These cartridges can be easily swapped to change the network configuration without rewiring the entire system. In some embodiments, an optical patch panel defines one or more slots containing one or more cartridges. For example, a wiring harness of the patch panel and the one or more cartridges may be configured to define the various connectivity topologies. Various embodiments of the present disclosure allow for efficient servicing of various components of server racks.

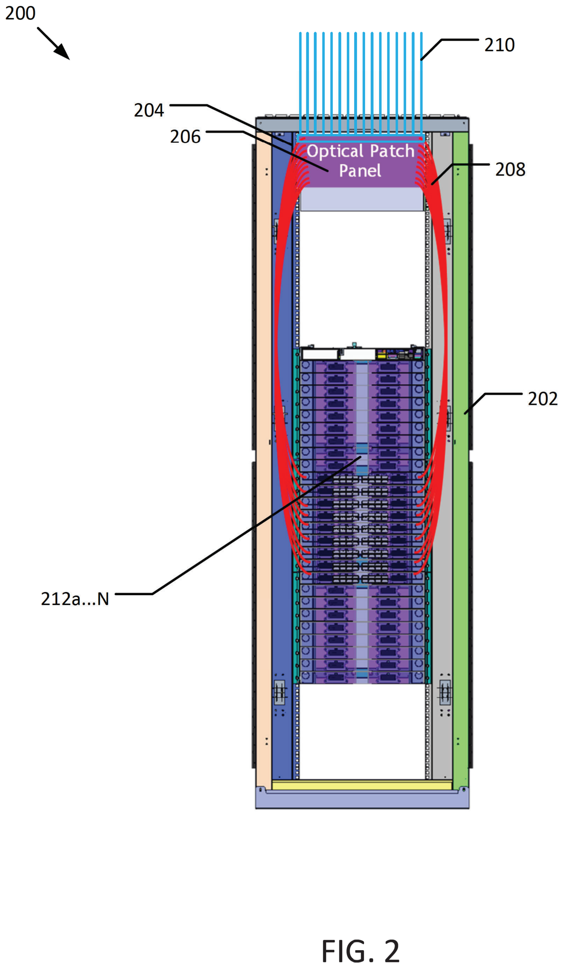

FIG. 2 illustrates an example server rack 200, in accordance with at least one embodiment. In at least one embodiment, the server rack 200 comprises, without limitation, at least one server rack frame 202, at least one housing 204, at least one optical patch panel 206, at least one plurality of L1 connections 208, at least one plurality of L2 connections 210, and/or at least one plurality of processing units 212a...N (collectively "212").

In at least one embodiment, the server rack frame 202 has a chassis having components each configured to host a plurality of computing resources. In at least one embodiment, the server rack frame 202 may be comprised of various materials, for example, such as metal and/or other materials. In at least one embodiment, the server rack frame 202 may define the housing 204. In at least one embodiment, the housing 204 may be configured to contain the optical patch panel 206. In various embodiments, the server rack frame 202 may define a plurality of housings such as the housing 204. In such embodiments, the plurality of housings may be configured to contain respective optical patch panels. In some embodiments, the server rack frame 202 has one or more cooling features, such as air cooling conduits, liquid cooling tubing/connections, and/or the like that may be selectively used to cool the servers supported within the server rack frame 202.

In at least one embodiment, the optical patch panel 206 may be enclosed within the housing 204. In at least one embodiment, the optical patch panel 206 may be configured to interface between the plurality of L1 connections 208 and the plurality of L2 connections 210. In at least one embodiment, the optical patch panel 206 may be a removable and/or interchangeable optical patch panel. For example the optical patch panel 206 may include one or more removable and/or interchangeable cartridges defining the connectivity between the plurality of L1 connections 208 and the plurality of L2 connections 210. In at least one embodiment, respective cartridges may define various connectivity topologies (e.g., shuffle connectivity topologies, hierarchical connectivity topologies, and/or other connectivity topologies). In at least one embodiment, the respective cartridges may be removable and/or interchangeable through a front of the server rack 200. In at least one embodiment, the optical fibers of the various optical fiber groupings (e.g., L1 and/or L2) may be pluggable and/or hot-swappable. For example, if a respective optical fiber is damaged, the respective optical fiber may be replaced without replacing an entire transceiver.

In at least one embodiment, the plurality of L1 connections 208 may be configured to connect multiple processing systems within the server rack 200. In at least one embodiment, the plurality of L2 connections 210 may be configured to connect the server rack 200 to one or more other server racks in a datacenter.

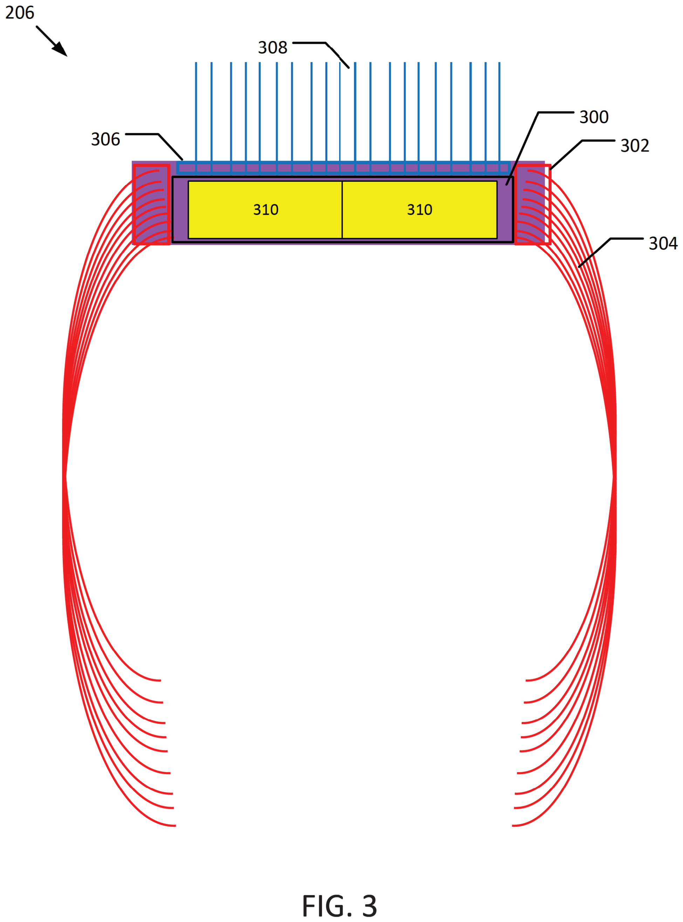

FIG. 3 illustrates the optical patch panel 206 of the server rack 200, in accordance with at least one embodiment. In at least one embodiment, the optical patch panel 206 comprises, without limitation, at least one internal patch panel cabling cartridge 300, at least one L1 connector 302, at least one plurality of L1 optical fibers 304, at least one L2 connector 306, at least one plurality of L2 optical fibers 308, and/or one or more cartridges 310.

In various embodiments, the optical patch panel 206 may include a plurality of internal patch panel cabling cartridges (e.g., the cartridges 310). In at least one embodiment, the internal patch panel cabling cartridge 300 may define a connectivity topology of the optical patch panel 206.

In at least one embodiment, the L1 connector 302 may be configured to connect the plurality of L1 optical fibers 304 to the internal patch panel cabling cartridge 300. In at least one embodiment, the plurality of L1 optical fibers 304 may be connected, via other connectors, on an exterior of the housing 204. In at least one embodiment, the plurality of L1 optical fibers 304 may connect a plurality of computing resources to one another. In at least one embodiment, the plurality of L1 optical fibers 304 may connect the plurality of computing resources to the optical patch panel 206 via the L1 connector 302.

In at least one embodiment, the L2 connector 306 may be configured to connect the plurality of L2 optical fibers 308 to the internal patch panel cabling cartridge 300. In at least one embodiment, the plurality of L2 optical fibers 308 may be connected, via other connectors, on an exterior of the housing 204. In at least one embodiment, the plurality of L2 optical fibers 308 may connect the server rack 200 to one or more other server racks.

In at least one embodiment, the optical patch panel 206 (and/or the housing 204 enclosing the optical patch panel 206) may include one or more cartridges 310. In at least one embodiment, the one or more cartridges 310 may be connected to one another and/or to other components of the optical patch panel 206 via at least one or more connections built into the housing 204 and/or the optical patch panel 206. In at least one embodiment, the one or more cartridges 310 may be connected to one another and/or to other components of the optical patch panel 206 via at least one or more connections positioned on certain panels of the one or more cartridges 310, wherein various connectors may be used to connect the one or more cartridges 310 via the panels. In at least one embodiment, there may be one or more cables or other circuits (e.g., optical circuits, electrical circuits, and/or the like) inside the one or more cartridges 310 defining the connections between the L1/L2 connections. The one or more cartridges may be removable and/or interchangeable through a front panel and/or a back panel of the housing.

In the example of FIG. 3, the plurality of L1 optical fibers 304 and the plurality of L2 optical fibers 308 appear to be connected to the optical patch panel 206 from the sides and from the top, respectively; however, this illustration is not intended to be limiting. For example, the plurality of L1 optical fibers 304 (and the L1 connector 302) may be connected to the optical patch panel 206 via the front and/or the back of the housing. Similarly, the plurality of L2 optical fibers 308 (and the L2 connector 306) may be connected to the optical patch panel 206 via the front and/or the back of the housing. The same is true of the illustration of FIG. 2.

As a more specific example, the optical patch panel 206 may comprise a plurality of connectors for L1 optical fibers 304 and a plurality of connectors for L2 optical fibers 308. The connectors may have connector ports on an exterior of the optical patch panel 206 to accept optical fibers having corresponding connector types. The plurality of connectors for the L1 optical fibers 304 and the plurality of connectors for the L2 optical fibers 308 may additionally comprise one or more connectors on an interior of the optical patch panel 206 that are specifically configured for attachment relative to corresponding connectors of a cartridge. As an example, a cartridge may comprise a housing that is slideably insertable into the interior of the optical patch panel 206. In some embodiments, the optical patch panel comprises one or more guides to ensure the cartridges are properly aligned for sliding into the interior of the optical patch panel. The cartridges comprise a plurality of connectors on an exterior of the housing of the cartridge that are configured to snap into the connectors of the interior of the optical patch panel, thereby optically connecting the cartridge with the plurality of optical fibers. The interior of the cartridges define a cables, or other optical interconnects from the connectors that define a topology as discussed in greater detail herein. As mentioned, the cartridge is slideable into the interior of the optical patch panel 206, and may snap into connection with the connectors of the interior of the optical patch panel 206 when the cartridge is fully inserted into the optical patch panel 206.

In some embodiments, a first cartridge may be configured to be connected with the plurality of L1 optical fibers and a second cartridge may be configured to be connected with the plurality of L2 optical fibers (each being connected by snapping connectors of the cartridge into the corresponding connectors of the interior of the optical patch panel 206). As discussed herein, for embodiments in which multiple cartridges are provided (e.g., a first cartridge for connection with the plurality of L1 optical fibers and a second cartridge for connection with the plurality of L2 optical fibers), the cartridges may be connected to pass data therebetween, for example with optical connectors that may be snapped to corresponding connectors of the respective cartridges. In this way, different connection topologies may be provided for connection of the plurality of L1 optical fibers and for the plurality of L2 optical fibers, and a technician can select an appropriate mix of network topology for the L1 cartridge and L2 cartridge. However, it should be understood that in some embodiments, a single cartridge comprises connectors to snap into the L1 connectors and the L2 connectors of the optical patch panel 206, and the network topology is defined entirely within the single cartridge. In some embodiments, the one or more cartridges are positioned and replaceable from within the interior of the optical patch panel 206, and a front panel of the optical patch panel 206 may enclose the cartridges within the interior thereof.

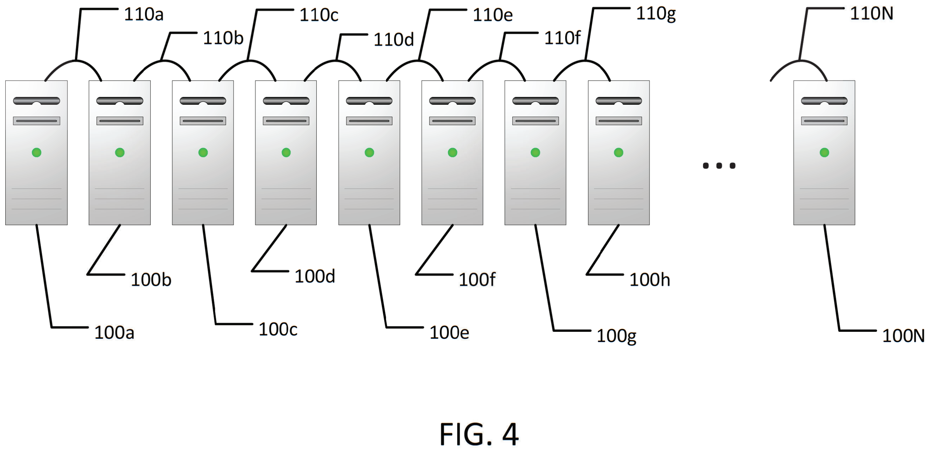

FIG. 4 illustrates a plurality of server racks 200a...N that may be within a datacenter, in accordance with at least one embodiment. In at least one embodiment, the plurality of server racks 200a...N may be connected to one another via the plurality of L2 connections 210. For example, a server rack 200a may be connected to a server rack 200b via a plurality of L2 connections 210a, the server rack 200b may be connected to a server rack 200c via a plurality of L2 connections 210b, and so on until an Nth server rack is connected to an (N-1)th server rack via an Nth plurality of L2 connections.

In the example of FIG. 4, the plurality of server racks 200a...N appear to be connected to one another in series; however, this illustration is not intended to be limiting. For example, the plurality of server racks 200a...N may be connected to one another in any number of ways. An example connection scheme may have each server rack connecting to the next server rack. Another example connection scheme may have one or more server racks connecting to one or more other server racks. Any number of connection schemes are enabled by the present disclosure.

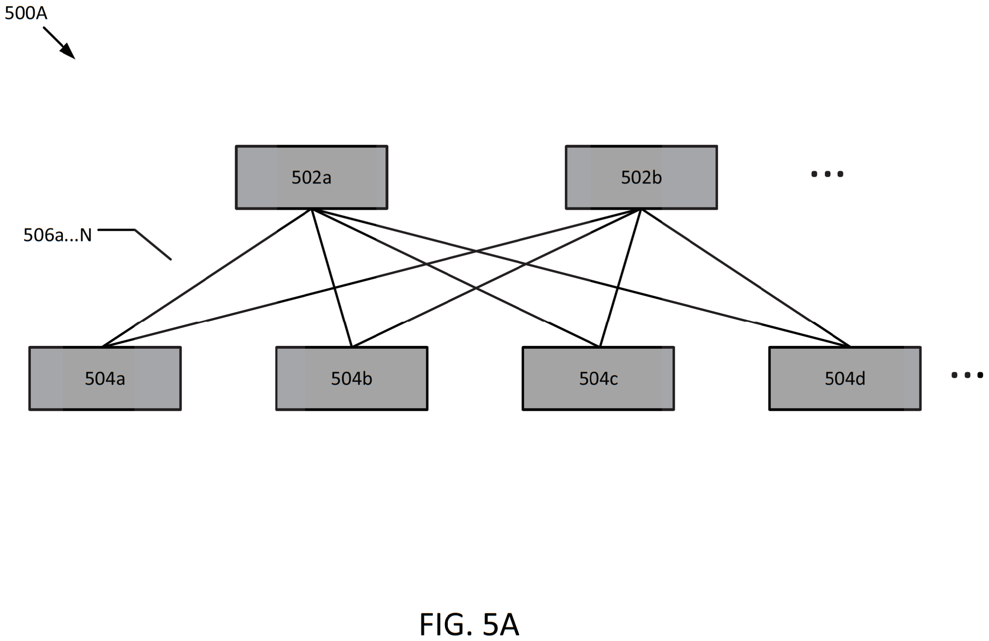

FIGS. 5A-5B illustrate a shuffling connectivity topology and a hierarchical connectivity topology, respectively, in accordance with at least one embodiment. FIG. 5A illustrates a shuffling connectivity topology 500A, in accordance with at least one embodiment. In at least one embodiment, the shuffling connectivity topology 500A comprises, without limitation, a plurality of connectors 502a...N (collectively "502"), a plurality of connectors 504a...N (collectively "504"), and/or a plurality of shuffling connections 506a...N (collectively "506").

In at least one embodiment, the plurality of connectors 502 may be L1 connectors and/or L2 connectors. In at least one embodiment, the plurality of connectors 504 may be L1 connectors and/or L2 connectors. In at least one embodiment, the plurality of shuffling connections 506 may connect each of the connectors 502 to each of the connectors 504. For example, the connector 502a may be, through the connections 506, connected to the connectors 504a, 504b, 504c, 504d, up to 504N. The connector 502b may be similarly connected to the connectors 504a-504N.

In at least one embodiment, the shuffling connectivity topology 500A may be embodied within a single cartridge or within two or more cartridges. For example, the connectors 502a and 502b may be in a first cartridge and the connectors 504a-504d may be in a second cartridge that is connected to the first cartridge. In another example, the connectors 502a-502b and 504a-504d may be in a single cartridge.

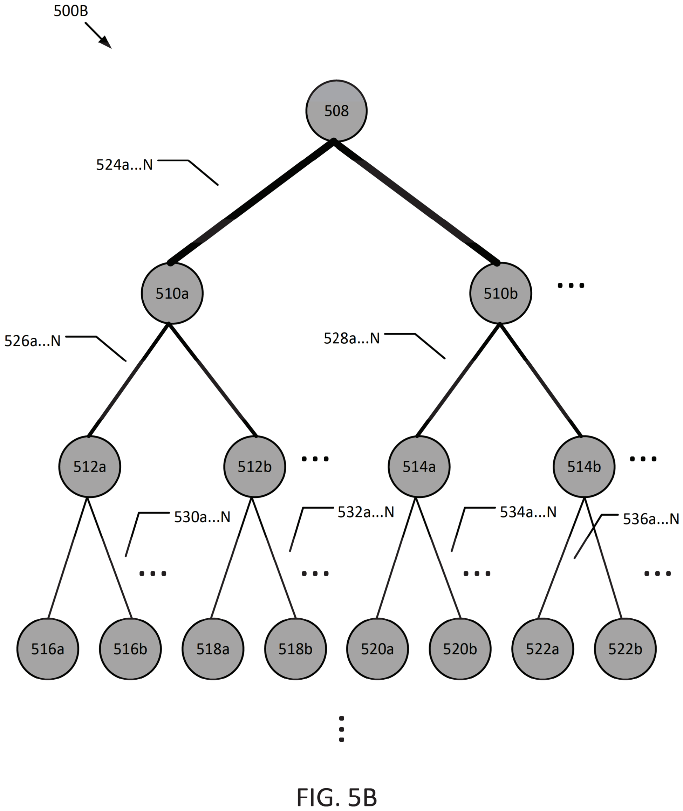

FIG. 5B illustrates a hierarchical connectivity topology 500B, in accordance with at least one embodiment. In at least one embodiment, the hierarchical connectivity topology 500B comprises, without limitation, at least one connector 508, at least one plurality of connectors 510a...N (collectively "510"), at least one plurality of connectors 512a...N (collectively "512"), at least one plurality of connectors 514a...N (collectively "514"), at least one plurality of connectors 516a...N (collectively "516"), at least one plurality of connectors 518a...N (collectively "518"), at least one plurality of connectors 520a...N (collectively "520"), at least one plurality of connectors 522a...N (collectively "522"), at least one plurality of connections 524a...N (collectively "524"), at least one plurality of connections 526a...N (collectively "526"), at least one plurality of connections 528a...N (collectively "528"), at least one plurality of connections 530a...N (collectively "530"), at least one plurality of connections 532a...N (collectively "532"), at least one plurality of connections 534a...N (collectively "534"), and/or at least one plurality of connections 536a...N (collectively "536"). The various connectors illustrated in the example of FIG. 5B are connected to one another according to a hierarchical topology.

In at least one embodiment, connector 508 may be an L1 connector or an L2 connector. In at least one embodiment, the plurality of connectors 510 may be L1 connectors and/or L2 connectors. In at least one embodiment, the plurality of connectors 512 may be L1 connectors and/or L2 connectors. In at least one embodiment, the plurality of connectors 514 may be L1 connectors and/or L2 connectors. In at least one embodiment, the plurality of connectors 516 may be L1 connectors and/or L2 connectors. In at least one embodiment, the plurality of connectors 518 may be L1 connectors and/or L2 connectors. In at least one embodiment, the plurality of connectors 520 may be L1 connectors and/or L2 connectors. In at least one embodiment, the plurality of connectors 522 may be L1 connectors and/or L2 connectors.

In at least one embodiment, the plurality of connections 524 may connect the connector 508 to the plurality of connectors 510. In the example of the connector 510a, the plurality of connections 526 may connect the connector 510a to the plurality of connectors 512. In the example of the connector 512a, the plurality of connections 530 may connect the connector 512a to the plurality of connectors 516. Similarly, other connectors of the example of FIG. 5B are connected to one another through such a hierarchical topology.

### Example Methods

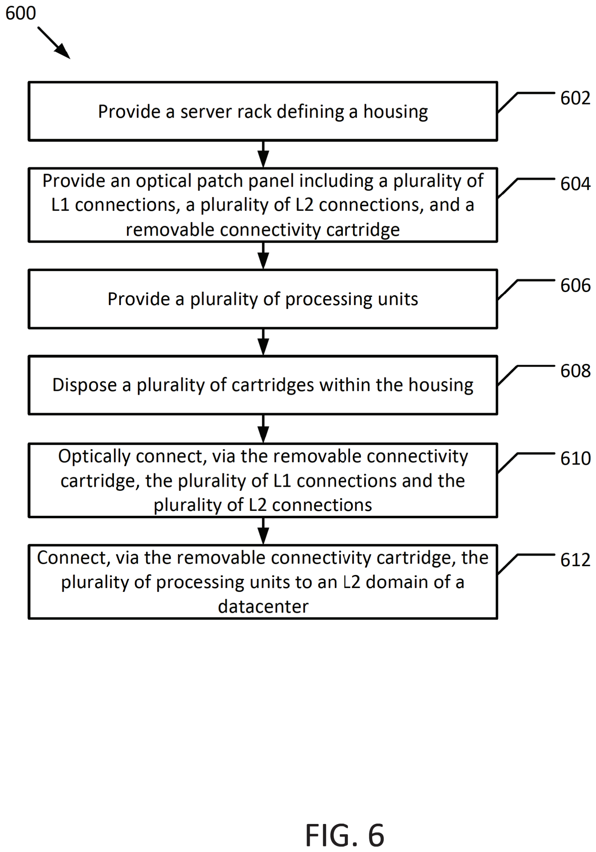

FIG. 6 provides an example method 600, in accordance with at least one embodiment. At step 602, a server rack (e.g., the server rack 200) defining a housing (e.g., the housing 204) may be provided. At step 604, an optical patch panel (e.g., the optical patch panel 206) may be provided, wherein the optical patch panel includes a plurality of L1 connections (e.g., the plurality of L1 connections 208), a plurality of L2 connections (e.g., the plurality of L2 connections 210), and a removable connectivity cartridge (e.g., the internal patch panel cabling cartridge 300). At step 606, a plurality of processing units (e.g., the plurality of processing units 212) may be provided. At step 608, the plurality of cartridges may be disposed within the housing. At step 610, the plurality of L1 connections and the plurality of L2 connections may be optically connected via the removable connectivity cartridge. At step 612, the plurality of processing units may be connected to an L2 domain (e.g., one or more other processing units of one or more other server racks) of a datacenter via the removable connectivity cartridge.

### Example Systems Including Optical Patch Panels

In various embodiments, optical patch panels 206 are incorporated into various systems. For example, various optical patch panels 206 may be incorporated into datacenters, CPO switches, processing units, ICs, systems on and/or including PCBs, optical interconnects, and/or the like. Some example systems that may include optical patch panels 206 of various embodiments are now described.

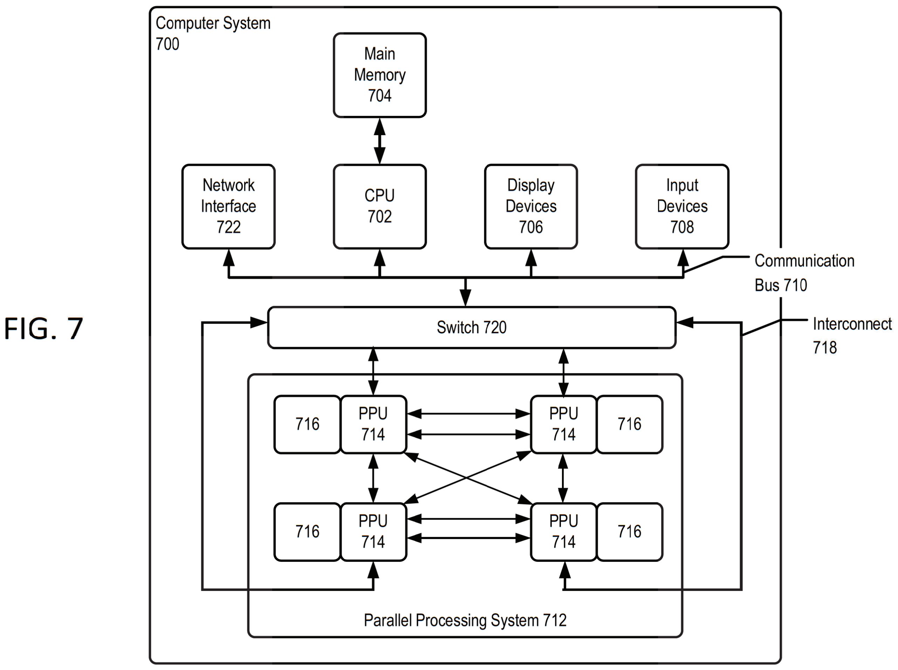

FIG. 7 illustrates an example computer system 700 that may include electrical components, in accordance with at least one embodiment. In at least one embodiment, computer system 700 is configured to implement various processes and methods described throughout this disclosure.

In at least one embodiment, computer system 700 comprises, without limitation, at least one computing resource embodied as a central processing unit ("CPU") 702 that is connected to a communication bus 711 implemented using any suitable protocol, such as PCI ("Peripheral Component Interconnect"), peripheral component interconnect express ("PCI-Express"), AGP ("Accelerated Graphics Port"), HyperTransport, or any other bus or point-to-point communication protocol(s). In at least one embodiment, computer system 700 includes, without limitation, a main memory 704 and control logic (e.g., implemented as hardware, software, or a combination thereof) and data are stored in main memory 704 which may take form of random access memory ("RAM"). In at least one embodiment, a network interface subsystem ("network interface") 722 provides an interface to other computing devices and networks for receiving data from and transmitting data to other systems from computer system 700.

In at least one embodiment, computer system 700 includes, without limitation, input devices 708, parallel processing system 712, and display devices 706 which can be implemented using a conventional cathode ray tube ("CRT"), liquid crystal display ("LCD"), light emitting diode ("LED"), plasma display, or other suitable display technologies. In at least one embodiment, user input is received from input devices 708 such as keyboard, mouse, touchpad, microphone, and more. In at least one embodiment, each of foregoing modules can be situated on a single semiconductor platform to form a processing system.

In at least one embodiment, computer programs in form of machine-readable executable code or computer control logic algorithms are stored in main memory 704 and/or secondary storage. Computer programs, if executed by one or more processors, enable system 700 to perform various functions in accordance with at least one embodiment. memory 704, storage, and/or any other storage are possible examples of computer-readable media. In at least one embodiment, secondary storage may refer to any suitable storage device or system such as a hard disk drive and/or a removable storage drive, representing a floppy disk drive, a magnetic tape drive, a compact disk drive, digital versatile disk ("DVD") drive, recording device, universal serial bus ("USB") flash memory, etc. In at least one embodiment, architecture and/or functionality of various previous figures are implemented in context of CPU 702; parallel processing system 712; an integrated circuit capable of at least a portion of capabilities of both CPU 702; parallel processing system 712; a chipset (e.g., a group of integrated circuits designed to work and sold as a unit for performing related functions, etc.); and any suitable combination of integrated circuit(s).

In at least one embodiment, architecture and/or functionality of various previous figures are implemented in context of a general computer system, a circuit board system, a game console system dedicated for entertainment purposes, an application-specific system, and more. In at least one embodiment, computer system 700 may take form of a desktop computer, a laptop computer, a tablet computer, servers, supercomputers, a smart-phone (e.g., a wireless, hand-held device), personal digital assistant ("PDA"), a digital camera, a vehicle, a head mounted display, a hand-held electronic device, a mobile phone device, a television, workstation, game consoles, embedded system, and/or any other type of logic.

In at least one embodiment, parallel processing system 712 includes, without limitation, a plurality of computing resources embodied as parallel processing units ("PPUs") 714 and associated memories 716. In at least one embodiment, PPUs 714 are connected to a host processor or other peripheral devices via an interconnect 718 and a switch 720 or multiplexer. In at least one embodiment, parallel processing system 712 distributes computational tasks across PPUs 714 which can be parallelizable-for example, as part of distribution of computational tasks across multiple graphics processing unit ("GPU") thread blocks. In at least one embodiment, memory is shared and accessible (e.g., for read and/or write access) across some or all of PPUs 714, although such shared memory may incur performance penalties relative to use of local memory and registers resident to a PPU 714. In at least one embodiment, operation of PPUs 714 is synchronized through use of a command such as_syncthreads( ), wherein all threads in a block (e.g., executed across multiple PPUs 714) to reach a certain point of execution of code before proceeding.

The switches within each layer (e.g., edge layer, aggregation layer, core layer) may be 1U switches, where "1U" refers to the industry-standard size for rack-mounted switches and servers. The switches may be electrical switches, optical switches, hybrid electro-optical switches, or any combination thereof. The switches may be implemented with suitable hardware and/or software that enables the routing of signals in the appropriate domain. For example, an electrical switch may include receivers that receive and convert optical signals into electrical signals for routing within the electrical switch. A receiver of an electrical switch may include a transimpedance amplifier (TIA), a photodetector, and a controller which all serve to convert the optical signals into electrical signals. Each electrical switch may further include transmitters that convert electrical signals routed within the electrical switch into optical signals for output to another switch (optical or electrical) within the system. For example, a transmitter of an electrical switch may include a light source, a modulator, and a controller that controls the modulator and light source. In some embodiments, receiver/transmitter pairs may be integrated into a single transceiver. Each electrical switch may also include internal switching circuitry for routing electrical signals within the electrical switch.

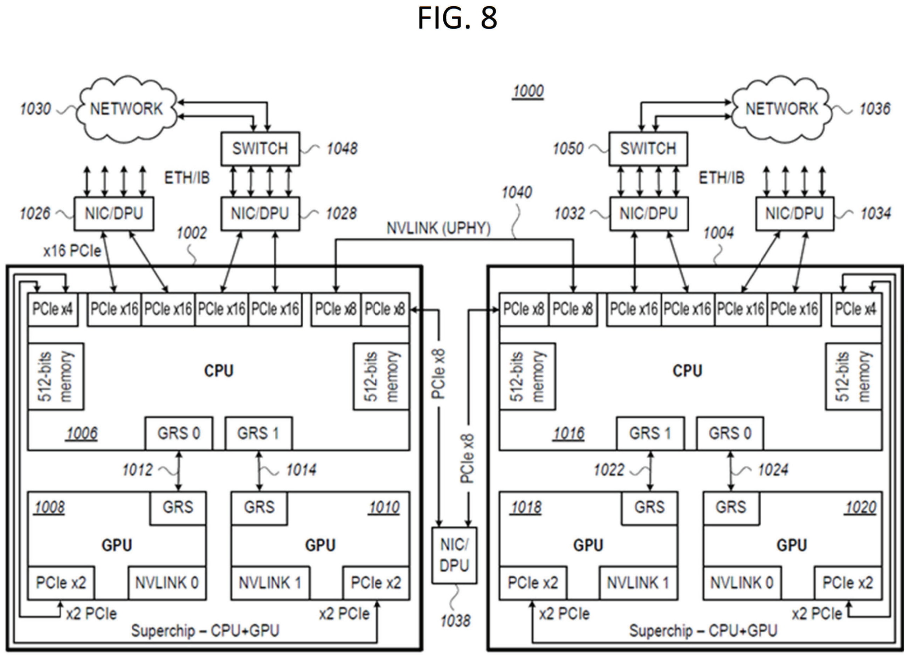

FIG. 8 is a block diagram that schematically illustrates a computing system 1000, e.g., a data center or a High-Performance Computing (HPC) cluster, in accordance with an embodiment that is described herein. System 1000 comprises a plurality of subsystems, e.g. multiple processing devices coupled to each other, multiple network devices, and multiple networks, according to at least one embodiment. Computing system 1000 is designed with multiple integrated circuits (referred to as processing devices), where each integrated circuit can include one or more CPUs and GPUs, data processing units (DPUs), quantum processing units (QPUs), a plurality of parallel processing units (PPUs), and application-specific integrated circuits (ASICs) forming a powerful and flexible architecture. QPUs configured to perform one or more operations associated with a quantum algorithm. In some embodiments, each of the one or more QPUs may include a plurality of qubits and the one or more QPUs may be in communication with each other via a quantum channel. In some embodiments, each of the plurality of qubits may include local qubits, global qubits, and/or synchronization qubits. In some embodiments, the local qubits of each QPU may be configured to perform the one or more operations associated with the quantum algorithm on the QPU that the local qubits are associated with.

The various processing devices are interconnected via an NVLink or other high-speed interconnect, enabling high-speed communication between the subsystems, and are also connected through a NIC or DPU to ensure efficient data transfer across computing system 1000 and to one or more external networks 1030, 1036. In the present example, system 1000 comprises a packet switch 1048 that connects NIC/DPU 1028 to network 1030, and a packet switch 1050 that connects NIC/DPU 1032 to network 1036.

The coupling of processing devices through NVLink allows for seamless data exchange and parallel processing, enhancing overall computational performance. The processing devices are connected to multiple networks through one or more network interface controllers (NICs) or DPUs, enabling the system to handle complex, multi-network tasks with high bandwidth and low latency. This configuration is highly suitable for demanding applications that require significant processing power, such as artificial intelligence (AI), machine learning (ML), and data-intensive computing, while ensuring robust connectivity and scalability across various networked environments. The integrated circuits of the computing system 1000 can include one or more CPUs and one or more GPUs.

FIG. 8 also demonstrates an example architecture of a multi-GPU architecture. As illustrated in the figure, computing system 1000 includes a processing device 1002 with a multi-GPU architecture. In particular, processing device 1002 may be a system-on-chip and includes multiple subsystems such as a CPU 1006, a GPU 1008, and a GPU 1010. CPU 1006 can be coupled to GPU 1008 via a die-to-die (D2D) or chip-to-chip (C2C) interconnect 1012, such as a Ground-Referenced Signaling interconnect (GRS interconnect). CPU 1006 can be coupled to GPU 1010 via a D2D or C2C interconnect 1014. CPU 1006 can also couple to GPU 1008 and GPU 1010 via PCIe interconnects.

CPU 1006 can be coupled to one or more NICs or DPUs, which are coupled to one or more networks. For example, as illustrated in FIG. 7, CPU 1006 is coupled to a first NIC/DPU 1026, which is coupled to a network 1030. CPU 1006 is also coupled to a second NIC/DPU 1028, which is coupled to network 1030 via switch 1048. NIC/DPU 1026 and NIC/DPU 1028 can be coupled to network 1030 over Ethernet (ETH), NVLINK or InfiniBand (IB) connections, for example.

Computing system 1000 also includes a processing device 1004 with a multi-GPU architecture. In particular, processing device 1004 includes multiple subsystems including a CPU 1016, a GPU 1018, and a GPU 1020. CPU 1016 can be coupled to GPU 1018 via an D2D or C2C interconnect 1022. CPU 1016 can be coupled to GPU 1020 via a D2D or C2C interconnect 1024. CPU 1016 can also couple to GPU 1018 and GPU 1020 via PCIe interconnects. CPU 1016 can be coupled to one or more NICs or DPUs, which are coupled to one or more networks. For example, as illustrated in FIG. 8, CPU 1016 is coupled to a first NIC/DPU 1032, which is coupled to a network 1036. CPU 1016 is also coupled to a second NIC/DPU 1034, which is coupled to network 1036 via switch 1050. NIC/DPU 1032 and NIC/DPU 1034 can be coupled to network 1036 over Ethernet (ETH), NVLINK or InfiniBand (IB) connections.

In at least one embodiment, processing device 1002 and processing device 1004 can communication with each other via a NIC/DPU 1038, such as over PCIe interconnects. Processing device 1002 and processing device 1004 can also communicate with each other over a high-bandwidth communication interconnects 1040, such as an NVLink interconnect or other high-speed interconnects. The packet switches in FIG. 7 may comprise, for example, Nvidia Quantum-2 switches. The NICs/DPUs in the figure may comprise, for example, Nvidia Bluefield DPUs.

In various embodiments, any of the network devices of system 1000, e.g., any of NICs/DPUs 1026, 1028, 1032, 1034, and 1038, and/or any of switches 1048 and 1050, may include electrical components in accordance with various embodiments.

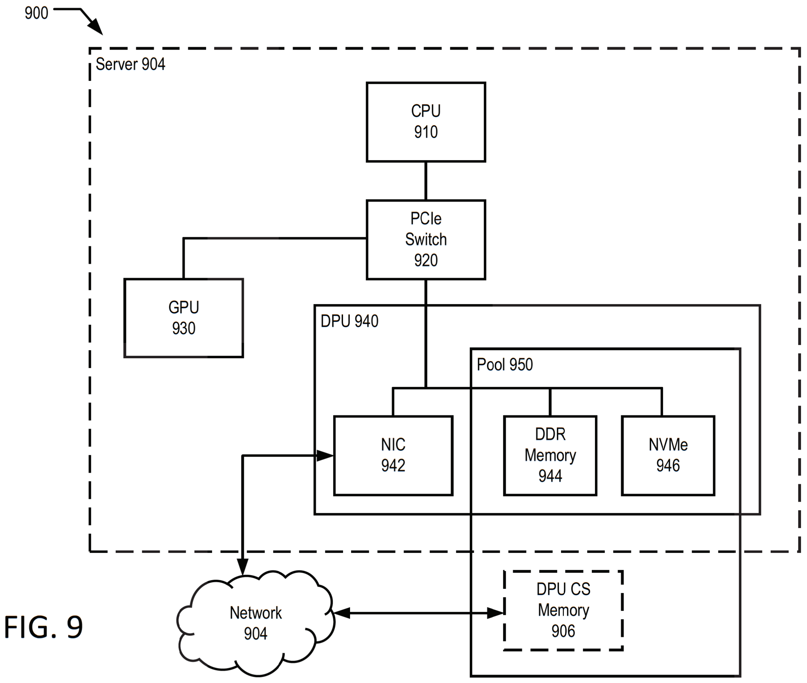

FIG. 9 illustrates an example computing environment 900 in which forward pass offloading to available memory can be performed, in accordance with at least one embodiment. It should be appreciated that embodiments of the present disclosure may also be used with reference to alternative environments and that specific discussion of components may be provided by way of non-limiting example and may include equivalents. Moreover, various features have been removed for clarity and conciseness. Additionally, systems and methods may be used with a variety of different architectures. The example computing environment 900 may include a server 902 which may be used to perform HPC workloads, such as AI training or machine learning model training. In an embodiment, the server 902 may be an application instance or a compute node. The server 902 may include a CPU 910 associated with a switch 920, such as a peripheral component interconnect express (PCIe) switch, which may control at least some data transmission over communication paths interconnecting various components. In an embodiment, the CPU 910 may include a root complex processor.

The PCIe switch 920 may also be associated with a GPU 930 and a DPU 940 and may transmit data between at least some of the CPU 910, the GPU 930, the DPU 940, and other components. In an embodiment, the PCIe switch 920 may be associated with more than one GPU or more than one DPU. In another embodiment, the PCIe switch 920 may be located within the DPU 940. The PCIe switch 920 may manage the transfer of at least some data between the CPU 910, the GPU 930, and the DPU 940. In another embodiment, the number of GPUs associated with the PCIe switch 920 may be equal to the number of DPUs associated with the PCIe switch 920. In at least one embodiment, the server 902 may include, without limitation, any number of the CPUs 910, the PCIe switches 920, the GPUs 930, and/or the DPUs 940, in any combination. For example, in at least one embodiment, server 902 could include eight, sixteen, thirty-two, and/or more GPUs 930. In at least one embodiment, communication paths interconnecting various components, including but not limited to the CPU 910, the PCIe switch 920, the GPU 930, and the DPU 940, in FIG. 9 may be implemented using any suitable protocols, such as peripheral component interconnect (PCI) based protocols (e.g., PCIe), or other bus or point-to-point communication interfaces and/or protocol(s), such as NV-Link high-speed interconnect, or interconnect protocols.

The DPU 940 may include a network interface controller (NIC) 942, a DDR memory 944, and a non-volatile memory express (NVMe) device 946. The NIC 942 may be able to interface with a network 904, which may also interface with additional NVMe devices available to the DPU 940, such as over fabric. In an embodiment, the DPU 940 may not include the NVMe device 946. In another embodiment, the NVMe device 946 may be located on the server 902 and not on the DPU 940. In yet another embodiment, the computing environment 900 may include more than one of the NVMe device 946, such as a first NVMe device in the DPU 940 and a second first NVMe device on the server 902 an associated directly with the PCIe switch 920. In an embodiment, the DPU 940 may not include the DDR memory 944 and may include a computational storage services (CSS) in place of, or in addition to, the DDR memory 944. For example, computing environment 900 may include DPU computational storage (CS) memory 906 available to the DPU 940 as part of the CSS. The network 904 may be able to interface with the DPU CS memory 906 through the NIC 942, according to any suitable interface protocol, such as remote direct memory access (RDMA) over Ethernet, InfiniBand, Fiber Channel, etc.

The total memory of the computing environment 900 available for data storage may be expanded through the use of the DPU 940 on nodes of the system. The DPU 940 may have access to a pool 950 of memory already available to the server 902, such as double data rate (DDR) memory, on-board NVMe devices, NVMe devices over fabric, and CS. The pool 950 of memory may include at least one of the DDR memory 944, NVMe device 946, and the DPU CS memory 906. The DPU 940 may also be able to access the available memory of other DPUs as part of the pool 950, and other DPUs may be able to access the available memory of DPU 940, such as the pool 950. This available memory can be accessed and utilized for data storage, without the addition of compute resources, such as compute nodes, which would be required using other solutions. The available pool 950 accessible to the DPU 940 may be provisioned for the server 902 to expand the total memory available for data storage, such as to reduce the data storage load on the CPU 910 or the GPU 930, which can instead increase the utilization of their memory for processing. For example, during training of an AI, the model states, residual states, activation functions, and checkpoints can be stored, or offloaded, on the pool 950 accessible to the DPU 940.

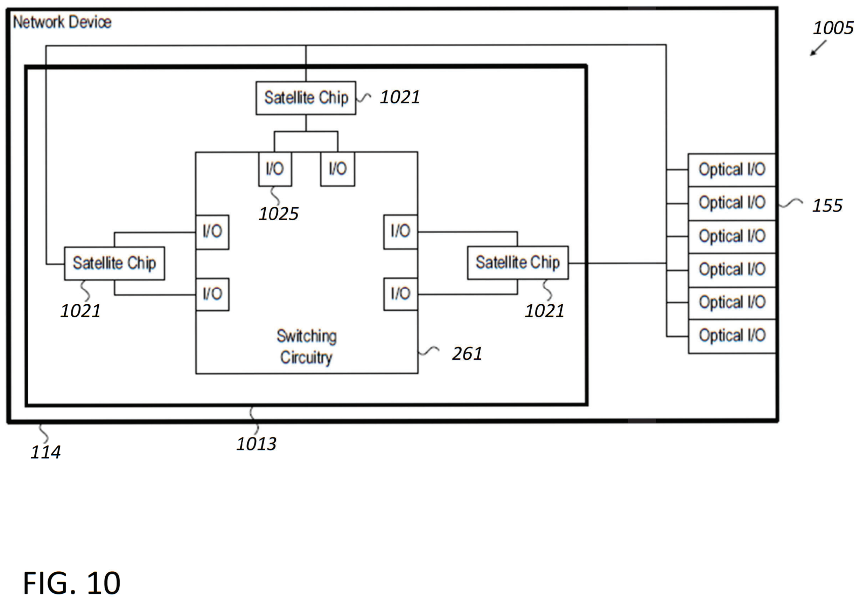

FIG. 10 is a block diagram that schematically illustrates a co-packaged Networking Device 114, in accordance with an embodiment that is disclosed herein. In some embodiments, the different chips that constitute a co-packaged Networking Device are assembled on a single substrate in what is typically called the MCM assembly 1013, or alternatively, a plurality of substrates are provided in a co-packaged Networking Device 114 that each support multiple chips thereon. The MCM assembly 1013 can include a switching circuitry embodying the computing resources 261 (embodying computing resources) surrounded by peripheral or satellite chips 1021. In some embodiments, the switching circuitry embodying the computing resources 261 and surrounding satellite chips 1021 are all mounted on a common substrate, although such a configuration is not required. The MCM assembly 1013 may be provided in a larger housing of the networking device 114, positioned behind the front panel 1005. The switching circuitry embodying the computing resources 261 may include one or more core digital Application Specific Integrated Circuits (ASICs), CPUs, GPUs, microprocessors, FPGAs, combinations thereof, and the like. The switching circuitry embodying the computing resources 261 may include a number of input ports and/or output ports. The Input/Output (I/O) ports 1025 may include electrical ports and/or optical ports. Additionally, the switching circuitry embodying the computing resources 261 may include a combination of electrical blocks and optical blocks. The electrical blocks of the switching circuitry embodying the computing resources 261 may include a number of electrical switches that are configured to route signals in an electrical domain. The optical blocks of the switching circuitry embodying the computing resources 261 may include a number of optical components that are configured to generate, detect and route signals in an optical domain. The MCM assembly 1013, in some embodiments, may concern or include multiple satellite chips 1021 that are assembled on the same substrate as the switching circuitry embodying the computing resources 261. In some embodiments, a configuration of the optical block(s) and a configuration of the electrical block(s) depends (e.g., is based on) on the number of optical ports in the I/O ports 1025.

Optical I/Os 1009, which may also be referred to as optical connectors, are placed at the front panel 1005. As mentioned above, connectivity between the MCM assembly 1013 and optical I/Os 1009 may be transferred to the front panel 1005 through optical fibers. This connection may be made directly with an optical I/O 1009 of the switching circuitry or may be made with one or more of the satellite chips 1021. The connection is often made with one or more of the satellite chips 1021 because the satellite chips 1021 may include the electro-optic converters and, possibly, the SERDES to natively support the connection. The satellite chips 1021 may include one or more of aDSP processor, driver, trans-impedance amplifier, laser, modulator, photodiode, serializer-deserializer, or the like.

Some embodiments of the present disclosure are directed to a multi-chip module (MCM) with a centrally positioned main die and a plurality of peripherally positioned MCM sockets configured to mechanically receive and electrically connect mezzanine packages, which may include co-packaged optics (CPO) packages and co-packaged copper (CPC) packages. Each mezzanine package may include a package substrate including a connector portion that is configured to engage the MCM socket and a main portion extending beyond the periphery of the MCM substrate. The main portion of the mezzanine package may be configured to receive optical devices and/or integrated circuits, such as via mezzanine sockets, to allow connections to be made between the optical devices and/or integrated circuits/RF copper cable connectors and the main die of the MCM. Due to the extension of the mezzanine package beyond the periphery of the MCM substrate, the physical size of the MCM substrate may remain small to reduce cost and avoid the previously discussed production challenges, while allowing connections to a number of optical devices and integrated circuits via the mezzanine packages, which occupy the relatively inexpensive space around the periphery of the MCM substrate. As used herein, the terms "co-packaged optic" (or "CPO") and "co-packaged copper" (or "CPC") may refer to an advanced heterogeneous integration of either optics and silicon or copper and silicon, in which either integration may be implemented on a single packaged substrate. The CPO may utilize pluggable optical modules that include an optical engine (OE) to convert optical signals to electrical signals and electrical signals to optical signals. The CPO may further be comprised of an optical component on a photonics die and an electrical component on an electrical die.

As used herein, a ball grid array (BGA) may be a type of surface-mount packaging used for integrated circuits. BGA packages use an array of metallic conductor balls arranged in a grid to permanently mount devices such as microprocessors on a PCB. The metallic conductor balls may then undergo the reflow process described above, wherein the metallic conductor balls may be preheated, then melted to bond the IC to a substrate to form an IC package.

As used herein, the term "flip chip (FC)" may refer to a method for interconnecting dies, such as semiconductor devices, IC chips, integrated passive devices, and microelectromechanical systems (MEMS), to external circuitry with solder bumps that have been deposited onto chip pads. The solder bumps may be deposited onto chip pads on the top side of the wafer during final wafer processing. The chip may be mounted to external circuitry (such as a circuit board or another chip or wafer) by "flipping" the chip, such that the chip's top side faces down and is positioned to allow the pads of the chip to align with matching pads on the external circuit. Solder is reflowed to complete the interconnect.

In the packaging of integrated circuit (IC) chips, various packaging schemes are employed, including traditional two-dimensional (2D) integrated circuit (IC) packages as well as the more recently introduced 2.5D IC and 3D IC packages. In 2D IC packages, multiple chips are mounted on a printed circuit board, where high-performance logic, lower-performance logic, memory, and analog/RF functions, and other functional elements are presented as discrete devices in separate chip packages. By contrast, in 2.5D ICs and 3D IC packages, multiple IC chips are mounted on a silicon interposer instead of a conventional package substrate. The silicon interposer, which is typically a silicon wafer, allows very small and high-density conductive traces to be formed between the multiple IC chips because the fabrication processes used to form the conductive traces are the same processes used to form the metal interconnects in the metalization layers of a silicon chip.

Compared to 2.5D IC packages and 3D IC packages, a circuit board with individually packaged chips, such as a 2D IC package, has numerous disadvantages. For example, a 2D IC package is generally larger, heavier, consumes more power, and, because the signals propagate relatively slowly across the circuit board from one chip to another, is slower than an equivalent 2.5D or 3D IC package. Furthermore, a 2D IC package has more possible points of failure, given that the soldered joints on the circuit board are more likely to fail than the electrical connections formed within an interposer. That said, troubleshooting a 2D IC package after the different chips have been mounted on the circuit board is relatively straightforward. In particular, the conductive traces carrying I/O signals between the various chips on the circuit board are easily accessible and therefore can be employed to measure specific I/O signals during troubleshooting.

By contrast, troubleshooting a 2.5D or 3D IC package is far more problematic because the I/O signals transmitted between the different chips typically are embedded in the silicon interposer and are not physically accessible. Furthermore, because 2.5D and 3D IC packages are high-bandwidth and are quite dense, typically implementations can include thousands of conductive traces routed between the different chips. One example of such an implementation is a memory bus residing in between a processor and a high-bandwidth memory chip. In such implementations, even if the traces could be physically accessed through the silicon interposer with a probe, the accurate and reliable selection of a specific conductive trace or combination of conductive traces for the purpose of troubleshooting the IC package would be very difficult, if not impossible.

In at least one embodiment, one or more parallel processor(s) 3312 incorporate circuitry optimized for graphics and video processing, including, for example, video output circuitry, and constitutes a graphics processing unit ("GPU"). In at least one embodiment, one or more parallel processor(s) 3312 incorporate circuitry optimized for general purpose processing. In at least embodiment, components of computing system 3300 may be integrated with one or more other system elements on a single integrated circuit. For example, in at least one embodiment, one or more parallel processor(s) 3312, memory hub 3305, processor(s) 3302, and I/O hub 3307 can be integrated into a SoC integrated circuit. In at least one embodiment, components of computing system 3300 can be integrated into a single package to form a system in package ("SIP") configuration. In at least one embodiment, at least a portion of components of computing system 3300 can be integrated into a multi-chip module ("MCM"), which can be interconnected with other multi-chip modules into a modular computing system. In at least one embodiment, I/O subsystem 3311 and display devices 3310B are omitted from computing system 3300.

### Conclusion

In the above description, an embodiment is an example or implementation of the disclosure. The various appearances of "one embodiment," "an embodiment," "certain embodiments," or "some embodiments" do not necessarily all refer to the same embodiments. Although various features of the disclosure may be described in the context of a single embodiment, the features may also be provided separately or in any suitable combination. Conversely, although the disclosure may be described herein in the context of separate embodiments for clarity, the disclosure may also be implemented in a single embodiment. Certain embodiments of the disclosure may include features from different embodiments disclosed above, and certain embodiments may incorporate elements from other embodiments disclosed above. The disclosure of elements of the disclosure in the context of a specific embodiment is not to be taken as limiting their use in the specific embodiment alone. Furthermore, it is to be understood that the disclosure can be carried out or practiced in various ways and that the disclosure can be implemented in certain embodiments other than the ones outlined in the description above.

The disclosure is not limited to those diagrams or to the corresponding descriptions. For example, flow need not move through each illustrated box or state, or in exactly the same order as illustrated and described. Meanings of technical and scientific terms used herein are to be commonly understood as by one of ordinary skill in the art to which the disclosure belongs, unless otherwise defined. While the disclosure has been described with respect to a limited number of embodiments, these should not be construed as limitations on the scope of the disclosure, but rather as exemplifications of some of the preferred embodiments. Other possible variations, modifications, and applications are also within the scope of the disclosure. Accordingly, the scope of the disclosure should not be limited by what has thus far been described, but by the appended claims and their legal equivalents.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

The disclosure of this application also includes the following numbered clauses:
Clause 1. An optical patch panel comprising:
   a plurality of L1 connections;
   a plurality of L2 connections; and
   a removable connectivity cartridge optically connecting the plurality of L1 connections and L2 connections.
Clause 2. The optical patch panel of clause 1, wherein the removable connectivity cartridge defines a connectivity topology selected from: shuffling or hierarchical.
Clause 3. The optical patch panel of clause 1, further comprising:
   a plurality of cartridges contained within a housing.
Clause 4. The optical patch panel of clause 3, wherein the plurality of cartridges are configured to be removable through a front panel of the housing.
Clause 5. The optical patch panel of clause 1, further comprising:
   a plurality of L1 connectors configured for at least: top connections, back connections, or front connections.
Clause 6. The optical patch panel of clause 1, further comprising:
   a plurality of L2 connectors configured for at least: top connections, back connections, or front connections.
Clause 7. The optical patch panel of clause 1, wherein the removable connectivity cartridge defines a port mapping scheme between the plurality of L1 connections and the plurality of L2 connections, and wherein the removable connectivity cartridge is interchangeable with a second removable connectivity cartridge defining a different port mapping scheme between the plurality of L1 connections and the plurality of L2 connections.
Clause 8. A server rack comprising:
   a plurality of processing units; and
   an optical patch panel comprising:
      a plurality of L1 connections;
      a plurality of L2 connections; and
      a removable connectivity cartridge optically connecting the plurality of L1 connections and L2 connections;
   wherein the plurality of processing units are connected to an L2 domain of a datacenter through the removable connectivity cartridge of the optical patch panel.
Clause 9. The server rack of clause 8, wherein the removable connectivity cartridge defines a connectivity topology selected from: shuffling or hierarchical.
Clause 10. The server rack of clause 8, further comprising:
   a plurality of cartridges contained within a housing of the server rack.
Clause 11. The server rack of clause 10, wherein the plurality of cartridges are configured to be removable through a front panel of the housing.
Clause 12. The server rack of clause 8, further comprising:
   a plurality of L1 connectors configured for at least: top connections, back connections, or front connections.
Clause 13. The server rack of clause 8, further comprising:
   a plurality of L2 connectors configured for at least: top connections, back connections, or front connections.
Clause 14. The server rack of clause 8, wherein the removable connectivity cartridge defines a port mapping scheme between the plurality of L1 connections and the plurality of L2 connections, and wherein the removable connectivity cartridge is interchangeable with a second removable connectivity cartridge defining a different port mapping scheme between the plurality of L1 connections and the plurality of L2 connections.
Clause 15. A method comprising:
   providing a server rack defining a housing;
   providing an optical patch panel comprising:
      a plurality of L1 connections;
      a plurality of L2 connections;
      a removable connectivity cartridge;
   providing a plurality of processing units;
   disposing a plurality of cartridges within the housing;
   optically connecting, via the removable connectivity cartridge, the plurality of L1 connections and the plurality of L2 connections; and
   connecting, via the removable connectivity cartridge, the plurality of processing units to an L2 domain of a datacenter.
Clause 16. The method of clause 15, wherein the removable connectivity cartridge defines a connectivity topology selected from: shuffling or hierarchical.
Clause 17. The method of clause 15, wherein the plurality of cartridges are configured to be removable through a front panel of the housing.
Clause 18. The method of clause 15, wherein the plurality of L1 connections are configured for at least: top connections, back connections, or front connections.
Clause 19. The method of clause 15, wherein the plurality of L2 connections are configured for at least: top connections, back connections, or front connections.
Clause 20. The method of clause 15, wherein the removable connectivity cartridge defines a port mapping scheme between the plurality of L1 connections and the plurality of L2 connections, and wherein the removable connectivity cartridge is interchangeable with a second removable connectivity cartridge defining a different port mapping scheme between the plurality of L1 connections and the plurality of L2 connections.

## Claims

1. An optical patch panel comprising:
a plurality of L1 connections;
a plurality of L2 connections; and
a removable connectivity cartridge optically connecting the plurality of L1 connections and L2 connections.

2. The optical patch panel of claim 1, wherein the removable connectivity cartridge defines a connectivity topology selected from: shuffling or hierarchical.

3. The optical patch panel of claim 1 or 2, further comprising:
a plurality of cartridges contained within a housing.

4. The optical patch panel of claim 3, wherein the plurality of cartridges are configured to be removable through a front panel of the housing.

5. The optical patch panel of claim 1-4, further comprising:
a plurality of L1 connectors configured for at least: top connections, back connections, or front connections.

6. The optical patch panel of claim 1-5, further comprising:
a plurality of L2 connectors configured for at least: top connections, back connections, or front connections.

7. The optical patch panel of claim 1-6, wherein the removable connectivity cartridge defines a port mapping scheme between the plurality of L1 connections and the plurality of L2 connections, and wherein the removable connectivity cartridge is interchangeable with a second removable connectivity cartridge defining a different port mapping scheme between the plurality of L1 connections and the plurality of L2 connections.

8. A server rack comprising:
a plurality of processing units; and
an optical patch panel comprising:
a plurality of L1 connections;
a plurality of L2 connections; and
a removable connectivity cartridge optically connecting the plurality of L1 connections and L2 connections;
wherein the plurality of processing units are connected to an L2 domain of a datacenter through the removable connectivity cartridge of the optical patch panel.

9. The server rack of claim 8, wherein the removable connectivity cartridge defines a connectivity topology selected from: shuffling or hierarchical.

10. The server rack of claim 8 or 9, further comprising:
a plurality of cartridges contained within a housing of the server rack.

11. The server rack of claim 10, wherein the plurality of cartridges are configured to be removable through a front panel of the housing.

12. The server rack of any of claims 8-11, further comprising:
a plurality of L1 connectors configured for at least: top connections, back connections, or front connections.

13. The server rack of any of claims 8-12, further comprising:
a plurality of L2 connectors configured for at least: top connections, back connections, or front connections.

14. The server rack of any of claims 8-13, wherein the removable connectivity cartridge defines a port mapping scheme between the plurality of L1 connections and the plurality of L2 connections, and wherein the removable connectivity cartridge is interchangeable with a second removable connectivity cartridge defining a different port mapping scheme between the plurality of L1 connections and the plurality of L2 connections.

15. A method comprising:
providing a server rack defining a housing;
providing an optical patch panel comprising:
a plurality of L1 connections;
a plurality of L2 connections;
a removable connectivity cartridge;
providing a plurality of processing units;
disposing a plurality of cartridges within the housing;
optically connecting, via the removable connectivity cartridge, the plurality of L1 connections and the plurality of L2 connections; and
connecting, via the removable connectivity cartridge, the plurality of processing units to an L2 domain of a datacenter.
